# EUROPEAN PATENT SPECIFICATION

(11) **EP 1 720 781 B1**
(45) Date of publication and mention of the grant of the patent: **23.12.2009**
(21) Application number: 05717259.5
(22) Date of filing: 02.03.2005
(51) Int. Cl.: B65G 53/24, B65G 53/60, F04F 5/20, B01D 47/10, B65F 5/00

(54) **METHOD AND APPARATUS FOR CONVEYING MATERIAL**
VERFAHREN UND VORRICHTUNG ZUR BEFÖRDERUNG VON MATERIAL
PROCEDE ET APPAREIL DE TRANSPORT DE MATERIAUX

(30) Priority: 03.03.2004 FI 20040344
(43) Date of publication of application: 15.11.2006
(73) Proprietor: Maricap OY, FI-01451 Vantaa (FI)
(72) Inventor: SUNDHOLM, Göran, 04310 Tuusula (FI)
(74) Representative: Laine, Terho Tapio
(86) International application number: PCT/FI2005/000132
(87) International publication number: WO 2005/085104

(56) References cited:
- EP-A2- 1 179 682
- DE-A1- 2 413 316
- DE-A1- 3 323 486
- GB-A- 288 862
- US-A- 1 965 866
- DATABASE WPI Week 200122, Derwent Publications Ltd., London, GB; Class D22, AN 1998-058758, XP002989008 & JP 9 301 504 A (NIPPON KOKAN KOJI KK) 25 November 1997
- DATABASE WPI Week 199828, Derwent Publications Ltd., London, GB; Class P41, AN 1998-316523, XP002989009 & JP 10 114 430 A (SATAKE SEISAKUSHO KK) 06 May 1998

## Description

### Background of the invention

The invention relates to a method, as defined in the preamble of claim 1, for conveying material, advantageously food-industry bulk material, especially cutting offals or food waste, by means of a pressure difference in a conveying pipe, in which method the material is fed to a conveying pipe, and further in the conveying pipe to a separator device in which the transferred material is separated from conveying air, in which method underpressure is achieved to the conveying pipe with an ejector apparatus the suction side of which is connected to the separator device, which ejector apparatus is operated with an actuating medium.

The invention relates also to an apparatus, as defined in the preamble of claim 15, for conveying material, advantageously food-industry bulk material, especially cutting offals and food waste, by means of a pressure difference in a conveying pipe, which apparatus comprises a conveying pipe for the material, a separator device, and a means for achieving underpressure to the conveying pipe with an ejector apparatus the suction side of which is connected to the separator device, which ejector apparatus is operated with an actuating medium.

Known are conveyance systems intended for conveying material, especially food products, such as meat products, which systems operate by means of a pressure difference. Such a system is presented in publication WO88/01597A. Several equivalent solutions exist. Also known are apparatuses, *inter alia,* in connection with ship kitchens, in which material is conveyed with a similar manner typically from several destinations to one or more containers or for further processing. Apparatuses are also utilised for conveying food products and waste in different institutions. Typical for them is that a vacuum apparatus is utilised for achieving a pressure difference, in which apparatus underpressure in the transfer pipe is achieved with vacuum generators, such as an ejector apparatus. Typically in the ejector apparatus, the suction in the conveying pipe is achieved with an ejector in which pressurised air is sprayed with a pneumatic apparatus to a nozzle, which, for its part, induces underpressure in the material-conveying pipe. In the conveying pipe, there is typically at least one valve member by opening and closing of which substitution air coming to the pipe is regulated. In known solutions, pressurised air is led to the ejector apparatus with constant pressure. This thus consumes always the same amount of energy regardless of the actual requirement of pressurised air. In a possible blockage situation of the conveying piping, the applicability of known solutions has been limited in clearing blockages or separate apparatuses have been required for it. Furthermore, adapting known solutions for conveying materials with different requirements has been limited. In addition, in known solutions the transferred material may cause odour and/or particle nuisances to the blowing air of the vacuum apparatus, such as an ejector apparatus.

An object of this invention is to achieve a totally novel solution with which the disadvantages of known solutions are avoided. An object of the invention is to achieve a system with which particle and/or odour nuisances possible in known prior-art solutions are avoided. In addition, a target of the invention is to achieve a solution which enables intensifying the suction of the ejector apparatus. A further object is to achieve an ejector solution which decreases energy requirements.

### Brief description of the invention

Mainly characteristic for the method according to the invention is that as the actuating medium of the ejector apparatus is utilised liquid mist, especially aqueous liquid mist.

In addition, the method according to the invention is characterised by what is stated in claims 2-14.

It is characteristic for the apparatus according to the invention that the ejector apparatus comprises at least one nozzle for spraying liquid mist which liquid mist is utilised as the actuating medium of the ejector, and a means for feeding the liquid to the nozzle.

In addition, the apparatus according to the invention is characterised by what is stated in claims 15-23.

The solution according to the invention has numerous significant advantages. By utilising liquid mist as the actuating medium, an extremely efficient suction effect is achieved. In addition, a significant saving effect of energy is achieved, up to 50% compared to a pneumatic ejector apparatus. Furthermore, liquid mist is extremely efficient in eliminating particles and reducing odour nuisances in the ejector device. By arranging the circulation of the sprayed actuating medium, an extremely efficient and water-consumption reducing effect is achieved. In addition, chemicals may be added, if required or desired, to the circulated actuating medium. By arranging a nozzle coaxially to the suction pipe, the capacity of the ejector may be further increased. By achieving a rotating movement for the separated liquid in the separator member, the separation of impurities from the liquid may be intensified and possible incurring to the liquid suction pipes prevented. By supplementing the apparatus with a possibility to feed a second medium to the ejector device, on one hand, possible odour nuisances in the ejector device may be further decreased, and at the same time, suction may be intensified. By bringing a second medium along with the actuating medium and, if required, by using the pressure of the actuating medium for bringing and/or feeding the second medium to the ejector space, an extremely advantageous and efficient solution is achieved. By arranging the nozzle of the second medium in the same unit with the nozzle of the actuating medium, a manufacturing-technically sensible solution is achieved. At the same time, a favourable solution is achieved for intensifying the suction of the ejector device. When utilising a material of greater density, such as liquid, advantageously water, the suction effect may be intensified. On the other hand, the suction effect may be further improved by bringing a second medium, even though the actuating medium is a liquid or a mixture of liquid and gas. When utilising liquid as the actuating medium and/or at least as the second medium, the gas flow may be "washed" by spraying it and thus possible particle and odour nuisances be eliminated. By utilising a separate pump to bring the second medium, its bringing may be easily regulated. In addition, the proportion of the actuating medium and the second medium may be regulated at the same time. By regulating the pressure of the actuating medium going to the ejector when required, considerable energy savings are achieved. In addition, the suction achieved by the ejector is affected by regulating the pressure, whereby also the underpressure and/or pressure difference of the material-conveying pipe may be conveniently regulated. By utilising flow paths arranged in parallel for regulating the pressure, which paths have a choke member and a valve which is opened and closed based on the impulses of the control system, is achieved an extremely feasible control system, which is easily modifiable. The transfer of material may be, if wished, begun with a larger pressure achieved for the ejector, and when the conveying process proceeds, the pressure may be decreased. In the different feed stations of the system, different materials may be handled, for which materials different pressure requirements may be set and thus the settings which affect their conveyance. On the other hand, in connection with different feed stations may be arranged a switch with which the user defines, for example according to the material fed, pressure values used in the conveyance. By arranging the choke members to be adjustable, the diversity of the system may be further improved, whereby it may be arranged for conveying materials of different qualities. The system allows, *inter alia,* a possibility to vary the pressure difference/(under)pressure in the material-conveying pipe, which characteristic may be further extended by arranging a connection according to the invention to be opened and closed for pressurised air in the material-conveying pipe. According to an embodiment of the invention, by utilising a means for monitoring the flow in the suction pipe between the separator device and the ejector device, the operation of the apparatus may be regulated based on the variations of the flow in question. By further arranging a material outlet means of the separator device to operate based on the commands of the control system, and further advantageously to use pressurised air as their actuating medium, the functionality of the system may be further improved.

### Brief description of the figures

In the following, the invention will be described in detail by means of an example with reference to the accompanying drawings, wherein
Figure 1 shows a diagram of an apparatus utilising a method according to the invention,
Figure 2 shows a diagram of an apparatus according to the invention,
Figure 3 shows a diagram of a second apparatus according to the invention,
Figure 4 shows a diagram of a further apparatus according to the invention,
Figure 5 shows a diagram of a further apparatus according to the invention,
Figure 6 shows a diagram of a further apparatus according to the invention, and
Figure 7 shows a diagram of a further apparatus according to the invention.

### Detailed description of the invention

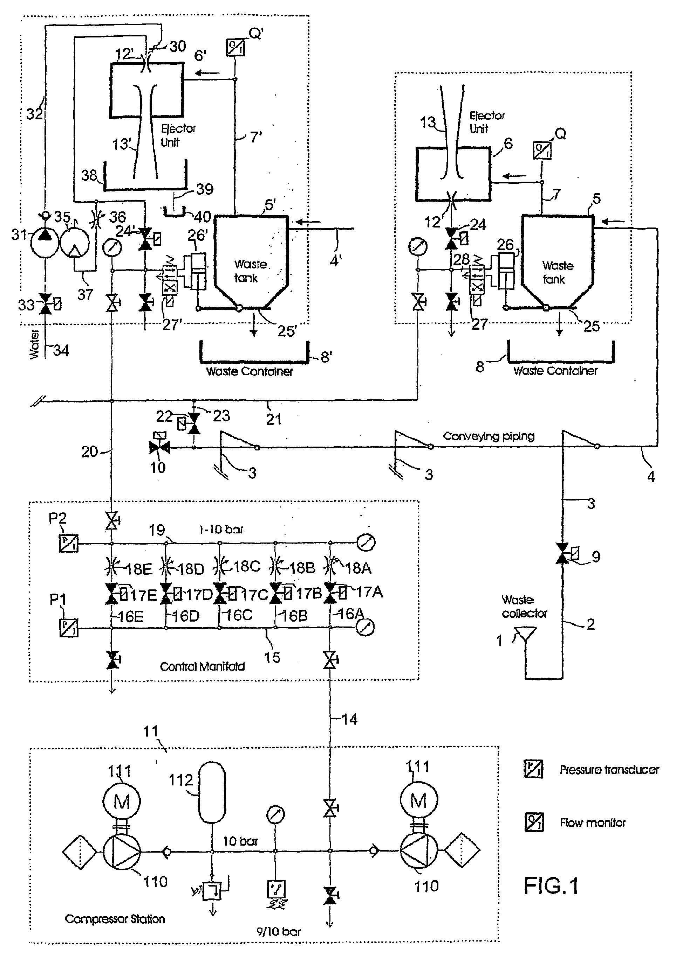

Figure 1 shows a diagram of a system utilising an apparatus. With reference number 1 is indicated a feed station for material intended for transferring. The feed station 1 is typically a feed funnel. The system may comprise several feed stations 1 from which the material intended for transferring is fed to the conveying piping 2, 3, 4. Typically, the conveying piping comprises a main conveying pipe 4 into which several feed stations may have been connected through feed pipes 2, 3. The figure shows as a whole only one feed station 1 which is connected through the feed pipe 2, 3 to the main conveying pipe 4. In addition, the figure shows partially two other feed pipes 3 which are connected to the same main conveying pipe 4. The fed material is transferred along the conveying piping 2, 3, 4 to a separator device 5 in the opposite end of the conveying piping, in which device the transferred material is separated, for example by means of centrifugal force, from conveying air. The separated material is removed, for example when required, from the separator device 5 to a material container 8 or for further processing. In the embodiment of the figure, the separator device 5 is provided with material outlet members. From the separator device 5 leads a pipe 7 to a vacuum unit 6. By means of the vacuum unit, the underpressure required for transfer is achieved in the conveying piping 4. In the solution according to the figure, the vacuum unit 6 is an ejector unit. The ejector unit 6 is connected to an actuating-medium source, such as a pneumatic source 11, which comprises typically at least one compressor 110 and pneumatic accumulator 112. The underpressure distributes the required force for transferring the material in the conveying piping. The ejector unit 6 is connected to the separator device 5 in a delivery station, into which device, for its part, the main conveying pipe 4 is connected.

To the feed pipe 2, 3 is arranged a valve member 9 which is opened and closed so that material portions of suitable size are conveyed from the feed pipe 2, 3 to the conveying pipe 4. Material is fed to the feed pipe from a funnel 1, and after the funnel is full, the valve member 9 is opened, either automatically or manually. To the conveying pipe 4 is arranged, most suitably to the opposite end of the conveying pipe in respect of the separator device 5, a second valve member 10 which is opened and closed when required. Typically, the second valve 10 is open when the first valve member 9 is closed. Then, when there is underpressure in the conveying pipe 4, substitution air is fed to the conveying pipe 4. This ensures that the material intended for conveying is conveyed in the conveying pipe 4 towards the separator device 5 as the first valve 9 is closed. When the first valve 9 is opened, the second valve 10 is closed, whereby the next material portion is fed to the conveying piping. After this, the first valve 9 is closed, and the second valve 10 is opened. Typically, to each feed pipe 3 is arranged an equivalent valve 9 (shown only for the part of one pipe 3 in the figure).

The system comprises a control and regulation apparatus with which, *inter alia,* the valves 9, 10 are opened and closed, either based on a manual impulse or automatically.

According to the invention, the method relates to conveying material, advantageously food-industry bulk material, especially cutting offals or food waste, by means of a pressure difference in a conveying pipe 4. According to the method, material is fed to a conveying pipe 4, and further in the conveying pipe to a separator device 5 in which the transferred material is separated from conveying air. To the conveying pipe 4 is achieved underpressure with an ejector apparatus 6, as known *per se*, the suction side of which is connected to the separator device 5, which ejector apparatus is operated with an actuating medium, such as pressurised air. In the method according to the invention, to the ejector apparatus 6 is brought a second medium, especially a liquidous and/or gaseous medium.

According to an advantageous embodiment, the second medium is brought to the ejector apparatus 6 along with pressurised air. Then, the actuating medium flow may be, if required, utilised for suctioning the second medium with it.

According to a second embodiment, the second medium is brought regardless of the actuating medium, such as pressurised air. This enables an extremely large range of regulation for bringing the second medium. Then, it is possible, for example, to regulate the proportion of the actuating medium, such as pressurised air, and the second medium in a desired manner. Typically, the proportion of the second medium and the actuating medium, such as pressurised air, is regulated if required.

According to an advantageous embodiment, the second medium is sprayed to the ejector device. By spraying the second medium, it may be mixed well, when desired, with the actuating medium, such as pressurised air, and/or the usually mainly gas-bearing material flow coming along the suction pipe 7. According to an embodiment, the second medium is sprayed to the ejector device 6 before the mixing of gases coming from the suction pipe 7 with the actuating medium of the ejector. According to an advantageous embodiment, the second medium is sprayed to the ejector device 6 during the mixing of the gases coming from the suction pipe 7 with the actuating medium or after it. The spraying may be extremely fine when utilising liquid as the second medium. Then, it may be sprayed as a liquid-bearing mist.

By bringing the second medium, one tries to eliminate odour and/or particle nuisances and/or intensify the suction effect of the ejector apparatus. As the second medium is typically utilised a liquidous medium, especially water.

In the method, according to an advantageous embodiment, at least a major part of the second medium and/or the actuating medium is separated from the gas flow. This is performed after the material flow coming through the suction pipe 7 has mixed with the flow of the actuating medium and/or the second medium. Then, the actuating medium flow and/or the second medium flow has had a chance to affect the flow coming through the suction pipe and has typically washed it. The gas flow coming from the ejector, which flow has liquid drops and/or material particles, is deflected so that the liquid and the material particles in it remain in a collector member 38 from which they are typically led out. The cleansed gas flow is led out. A part of the operation of the above-described characteristics is explained in detail below.

According to an advantageous embodiment, mainly gaseous medium, such as pressurised air, is utilised as the actuating medium.

According to a second embodiment, liquid-bearing medium, such as water mist, is utilised as the actuating medium. Then, it is possible to typically achieve a better suction effect in the suction pipe 7 compared to pressurised air. By bringing a second medium, the suction efficiency may be further improved.

An apparatus according to the invention for conveying material, advantageously food-industry bulk material, especially cutting offals and food waste, by means of a pressure difference in a conveying pipe 4, which apparatus comprises a conveying pipe 4 for the material, a separator device 5, and a means for achieving underpressure to the conveying pipe 4 with an ejector apparatus 6 the suction side of which is connected to the separator device 5, which ejector apparatus is operated with an actuating medium, such as pressurised air. The apparatus comprises a means 30 for feeding a second medium, advantageously a liquidous and/or gaseous medium, especially water, to the ejector apparatus 6. The means for bringing the second medium comprises at least one nozzle 30. The nozzle 30 may be arranged in connection with an actuating-medium nozzle 12 operating the ejector apparatus or separate from it.

According to an embodiment, the means for bringing the second medium comprises at least one nozzle 12, 30 from at least one opening of which the second medium is sprayed to the ejector device 6 along with pressurised air. Then, the second medium is brought amongst pressurised air already before the nozzle 12 or not until in the nozzle 12, 30.

According to a second embodiment, the means for bringing the second medium comprises at least one nozzle 12, 30 from at least one opening of which the second medium is sprayed to the ejector device separately from pressurised air. In this case, the same nozzle end, which has at least one dedicated opening for the second medium, may be utilised for pressurised air and the second medium.

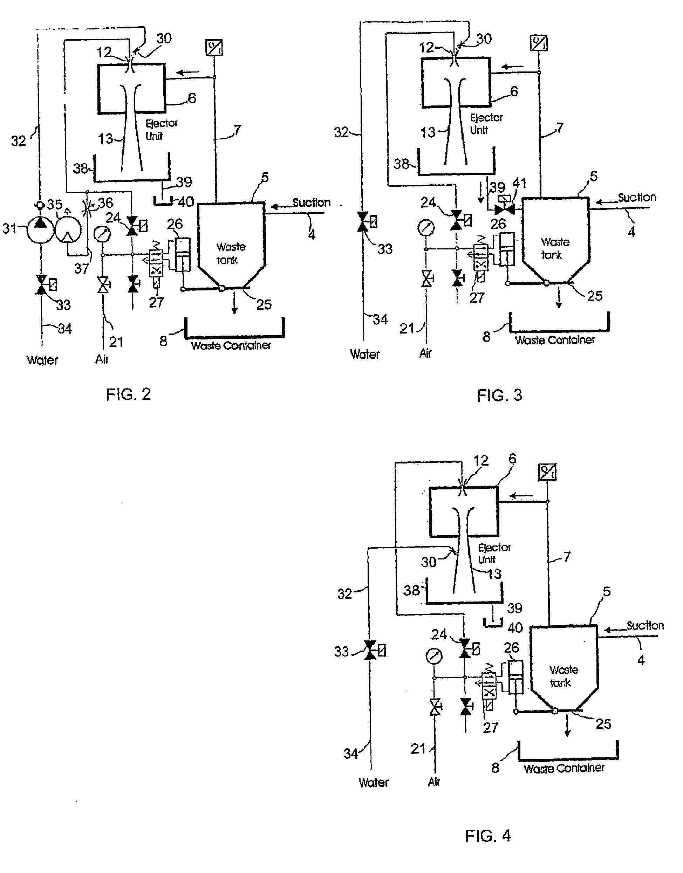

In the embodiment according to Figures 1 and 2, the means for bringing the second medium comprises a pump device 31. It has a pipe, such as a water pipe 34, or a connection to a separate container from which the pump device 31 pumps a second medium, typically liquid, along the pipe 32 going to the nozzle 12, 30.

According to an embodiment, at least a part of the devices utilised in bringing the second medium are operated with an actuating medium, such as pressurised air. Then, pressurised air may be used ejector-like to suction the second medium. On the other hand, also a solution according to Figure 2 may be utilised, in which solution the pump 31 is operated by a pneumatic motor 35.

According to an embodiment of a device according to the invention, at least one nozzle 30 of the second medium is arranged in the vicinity of the mouth of the ejector pipe 13. Then typically, an extremely favourable effect is achieved for the gas-bearing material flow coming along the suction pipe 7. Placing the nozzle of the second medium in the vicinity of the pneumatic nozzle is a good option both regarding the manufacturing technique and the efficient operation of the device.

According to a second embodiment, the nozzle 30 of the second medium is arranged to the ejector pipe 13, advantageously to its wall. Then, it is possible to affect the flow coming through the ejector pipe.

According to an embodiment, the apparatus comprises a means 38 for separating liquidous and/or solid matter from the gas flow. Typically is arranged a collector member 38, whereby the gas flow of the ejector device is additionally deflected so that liquid drops and/or material particles or at least a part of them remain in the collector member 20. The apparatus comprises an outlet fitting 39 for leading the separated liquid and/or solid matter to a sewer, a separate container 40 or back to the separator device 5. These alternatives are presented in Figures 2, 3 and 4.

In the following, the above-described characteristics are explained in detail. Between the pressurised-air production apparatus 11 and the ejector apparatus 6 is arranged a control apparatus which typically comprises several valve members 17A, 17B, 17C, 17D, 17E and choke members 18A, 18B, 18C, 18D, 18E. Each pair of a valve member and a choke member is arranged to a flow path 16A, 16B, 16C, 16D, 16E which are arranged between a pipeline 14 coming from the pneumatic source and a pipeline 20 going to the ejector device. In the embodiment of the figure, there are several valves 17A...17E connected in parallel. On the inlet side of pressurised air is for each flow path 16A...16E a common inlet path 15, and on the outlet side, there is a channel 19 connecting flow paths 16A...16E. The apparatus comprises a means for measuring and supplying pressure P1 of a pneumatic network in the flow direction before at least one valve 17A...17E and choke member 18A...18E, and in the flow direction of pressure P2, after the combination of a valve and a choke. When required, the pressurised-medium paths 16A...16E may be opened and/or closed in the control apparatus. Then, when the requirement of the pressurised medium, especially pressurised air, grows, for example, when the number of operating ejector units 6, 6' increases, it is possible to open medium paths 16A...16E, and correspondingly, when the number of operating ejectors 6, 6' decreases, to close paths. Alternatively, paths 16A...16E which allow a greater rate of medium flow may be opened with the valve members 17A...17E, and a path with a smaller flow rate may be closed. With the control apparatus, it is thus possible to achieve great many different combinations which tally to the different requirements of pressurised-air supply. Correspondingly, the pressure in the channel going to the ejectors may be affected. Then, it is possible to alter the underpressure achieved by the ejectors to the material-conveying pipe 4, 4' by affecting the number of open flow paths and/or the choke of paths 18A...18E. By means of adjustable chokes 18A...18E, the system may be arranged for extremely different applications and to function in connection with conveying devices for different materials. On the other hand, it is possible to arrange the pressure of the conveying pipe according to the requirements of different materials. Then, for example when conveying a material with light density, such as feathers, it is possible to utilise a lower pressure compared to when conveying a material with greater density, such as other offals. In addition, it is possible to change the prevailing conditions in the conveying pipe in the middle of the conveying process, whereby, for example, in the early stage of the conveyance there is a different pressure than in the final stage.

From a pneumatic network, typically after control valves 17A...17E, may be arranged a connection 23, which may be opened and closed with the valve member 22, to the conveying pipe 4. By means of this, it is possible to bring supplementary air to the conveying pipe, and if required, the pressure of the conveying pipe may be altered, for example, by pulsing, whereby the pressure of the conveying pipe may vary between underpressure and overpressure. This may be useful, for example, when handling the conveyed material and/or the conveying piping or, for example, when clearing a possible blockage in the conveying pipe 4. Typically, the connection 23 to be opened and closed is arranged to the conveying pipe 4 in the conveyance direction of the material before the connection of the feed pipe 3 and the conveying pipe 4.

In the pneumatic network, after control devices 17A...E, 18A...E and before the nozzle 12 of the ejector device 6, there is typically a closing valve 24 which may be controlled with the control system. Then, the spray for the nozzle 12 may be opened and closed when required.

In the solution according to the figure, there are also material outlet devices from the separator device 5. These comprise in the embodiment of the figure a closing member 25, arranged to the bottom part of the separator device 5, which member may be opened and closed when required. Then, the material accumulated to the separator device and conveyed in the pipe 4 exits the separator device 5, to a material container 8, typically arranged below it, from which container the material may be conveyed for further processing. In the solution according to the figure, the outlet devices are pressurised-medium-operated, especially pneumatic. The apparatus comprises, for example, a cylinder-piston combination 26 with which the closing member 25, which is, for example, a lid hinged to the bottom of the separator device, is opened and closed. The means further comprises a valve member 27 with which the cylinder-piston unit 26 is controlled. In the case of the figure, the medium source of the outlet devices is the same pressurised-air production station 11 from which pressurised air is led to the ejector devices. The pipeline 28 of the actuating medium of the outlet members is connected to a pipeline 21 going to the ejector 12. As a consequence of an impulse given by the control system or a manual one, the valve member moves to a position in which the cylinder-piston unit opens the closing member 25. Presumably for the time of unloading, the flow path going to the ejector nozzle is closed with the valve 24. After the unloading, the valve 27 returns to the position according to the figure, whereby the closing member 25 closes. After this, it is possible to open the flow path of pressurised air for the ejector nozzle 12.

The system may also additionally comprise a means for monitoring medium flow Q. In the solution according to the figure, a flow sensor Q is arranged between the separator device 5 and the ejector apparatus 6 in the pipeline 7. Based on the flow rate, the amount of underpressure in the conveying pipe 4 may be regulated. It is also possible to control the operation of the outlet device of the separator 5. When the flow decreases below a preset limit, it is possible, for example, to increase the pressure of the ejector nozzle 12 and to aim at increasing the flow in the pipeline 7, and at the same time, the underpressure of the conveying pipe 4. In addition to this, it is also possible to alter the pressure of the ejector device, for example, by opening and/or closing valves 17A...17E, and/or by opening and closing the valve 10, and/or by leading pressurised air to the conveying pipe 4, for example, by opening the valve 23. The decrease of flow is typically an indication of a possible blockage in the conveying pipe.

In addition, Figure 1 shows a second material-conveying pipe 4' into which, correspondingly, the conveyed material may be fed at least in one feed station (not shown in the figure). The feed station may be equivalent to the one utilised in connection with the first material-conveying pipe 4. The underpressure in the conveying pipe 4' is regulated with a second ejector device 6'. The second ejector device differs from the first ejector device 6 in that it comprises a spray means 30 of a second medium. The second medium is typically liquidous or gaseous or a mixture of a liquidous and a gaseous medium. In the embodiment of the figure, the medium is liquidous, aqueous medium which is brought to the ejector device 6'. By bringing the second medium, it is possible to affect the suction produced by the ejector device and/or it is possible to manage the characteristics of pressurised air affecting in the ejector device and/or mainly gaseous material flow drifting from the separator device to the ejector. Such characteristics are, *inter alia*, the odour nuisances possibly caused by the conveyed material, which nuisances are advantageously decreased by the sprayed second medium. In connection with the ejector apparatus 6', to the opposite end in regard to the spray nozzle of the ejector in the spray direction, is arranged a collector member 38 which collects at least a part of liquid drops, and leads the collected liquid, for example, to a container 40 or to a sewer or for further processing.

In the embodiment according to Figure 2, the second medium is pumped to the nozzle 30 with the pump means 31 along the pipeline 32. The pump means is operated in the embodiment of the figure by an actuator, especially a pneumatic motor 35. According to the figure, the pneumatic motor gets its actuating medium through a channel 37 connected to the pipeline going to the ejector nozzle 12'. To the channel 37 is arranged in the embodiment of the figure an adjustable choke 36. Then, it is possible to affect the motor 35 operating the pump 31, and thus the amount and/or pressure of the sprayed medium and/or the proportion of the pressurised air and the second medium of the ejector. Naturally, it is also possible to utilise other arrangements for spraying a second medium in the ejector apparatus. Figures 3 and 4 show alternative solutions.

In the example according to the figure, the outlet pressure in the compressor station 1 is, for example, 10 bar which may be, for example, the pressure of a pressure-monitoring member P1. With a control device according to the invention, pressure P2 may be regulated, for example, in the range of 1-10 bar. It is also possible, if the pressure P1 decreases for some reason, that by means of the system more flow paths 16A...16E are opened and/or a flow path is changed into one with a smaller choke effect. Then, the system aims at keeping the pressure P2 as desired even though the pressure P1 decreases. The pressure values of the example are the typical values of an embodiment, whereby the used pressures and the pressure ranges may vary considerably from the presented example. They are affected by, *inter alia,* conveyed material, capacity, extent of the system, and many other factors.

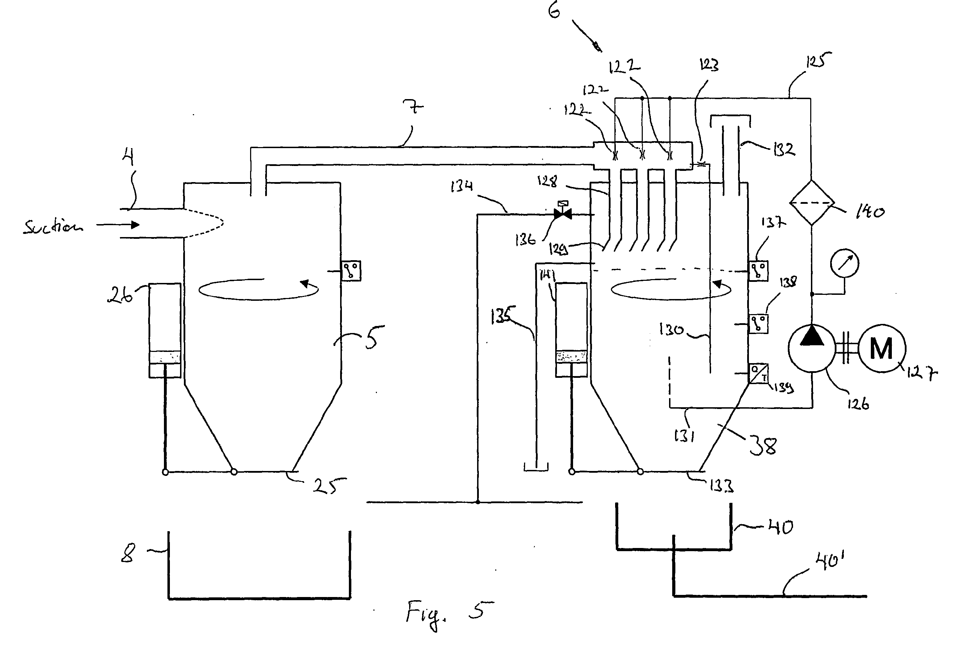

Figure 5 shows a second embodiment of a method and an apparatus according to the invention in which embodiment liquid spraying, especially liquid mist is utilised as the actuating medium of the ejector apparatus. The apparatus comprises at least one actuating-medium nozzle 122 which is directed advantageously towards an ejector pipe 128. In the figure, three ejector nozzles have been arranged in parallel, and there are also correspondingly three ejector pipes 128 in parallel. The ejector pipes are directed to a separator member 38 which is container-like in the embodiment of the figure. The separator member 38 comprises a means for separating liquid and/or solid matter from the gas flow. Then typically, the flow produced by the ejector device is deflected so that the liquid drops and/or material particles or at least a part of them remain in the collector member. In the embodiment of the figure, the liquid collected to the separator member is recirculated with pump means 126, 127 through pipelines 131, 125 to be sprayed with at least one ejector nozzle 122. To the pipeline is arranged a filter member 140. Most suitably, also to suction pipes 130, 131, to their inlet opening or its vicinity, is arranged a coarse mesh filter. According to the figure, the apparatus comprises at least one nozzle 123 for leading a second medium to the ejector space or its vicinity. With the ejector nozzles 122 is achieved sufficient suction in order to feed the second medium by means of the suction with the nozzle 123. In the embodiment of the figure, the second medium is also liquidous medium, most suitably actuating medium, which is led with the pipe 130 to the nozzle 123 from the separator member 38 or other container. The second medium intensifies the suction of the ejector apparatus to the pipe 7 and further through the separator member 5 to the pipe 4.

The ejector pipe 128 may be directed so that is produces a rotating movement in the separator member 38. In the solution according to the figure, the end 129 of the ejector pipe 128 is directed to achieve a tangential component to the flow so that a rotating movement of the liquid is achieved. With this rotating movement, for example, heavier particles and solid-material components may be led nearer to the walls of the separator member, whereby the suction pipes 130, 131, arranged for circulating the liquid, are advantageously arranged to a distance from the edges of the separator member 38. By circulating liquid, it is possible to utilise, if required, substances, chemicals, such as cleansers or similar, arranged among the liquid. To the separator member is arranged a closing member 133, whereby at least a part of the material and liquid collected to the separator member may be removed to a separate container 40, a sewer 40' or for further processing. The closing member may be operated with an actuator 141, such as a piston-cylinder combination or other device.

The separator member comprises typically level monitoring which is arranged with, for example, limit switches 137, 138. More liquid may be brought to the separator member with a pipeline 134 which is provided with a valve member, which may be controlled, for example, based on the signals given by the limit switches 137, 138 or when required. The apparatus may also comprise a means 139 for monitoring medium flow. The means may comprise a flow sensor arranged to the separator member, based on the information communicated by which flow sensor the ejector device and/or the filling/unloading of the separator member is controlled. The separator member comprises also an overfill blocking pipe 135 which leads the excess of the liquid collected to the separator member 38 to, for example, a sewer. To the separator member is arranged a gas outlet valve 132 through which the gases arrived to the separator member may exit the separator member, most suitably "washed".

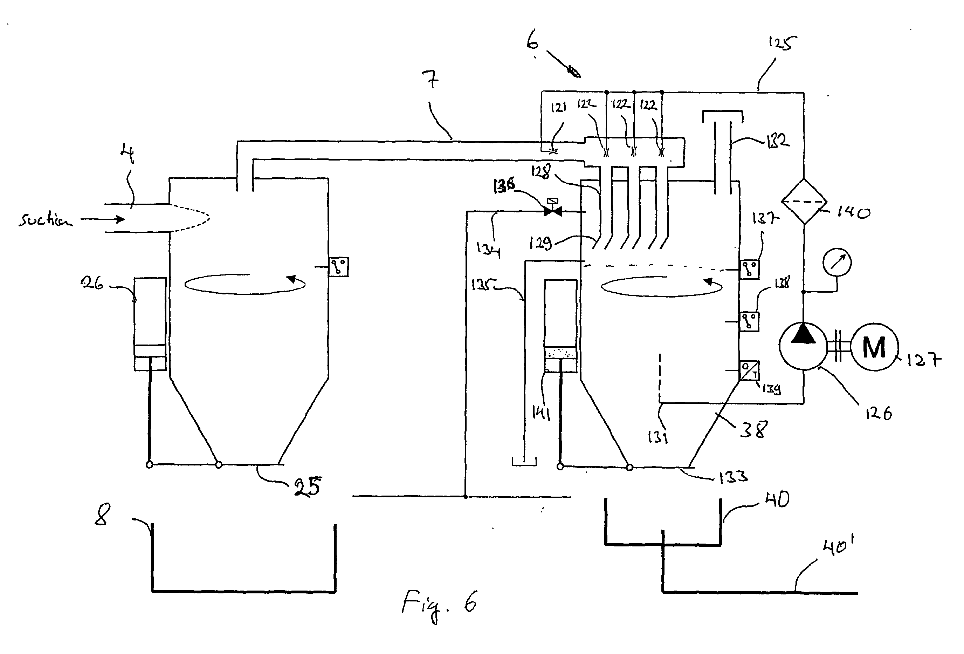

Figure 6 shows a further advantageous embodiment of an apparatus according to the invention, in which embodiment to the pipe 7 is arranged a nozzle 121 for spraying actuating medium, most suitably water mist. The nozzle intensifies the suction effect achieved by the apparatus, and further intensifies the effect cleansing the gas flow. The nozzle 121 is directed, most suitably coaxially, to the pipe 121. In addition to the nozzle 121, in the flow direction after the nozzle 121 may be arranged at least one ejector nozzle 122 and ejector pipe 128 which are arranged towards the separator member 38. The nozzle 121 and the ejector nozzle 122 are, in the embodiment of Figure 6, arranged to an angle in regard to each other. The nozzles achieve suction to their vicinity, whereby the gas flow mixes with the spray, most advantageously liquid mist spray, whereby is achieved an efficient cleansing of the gas flow.

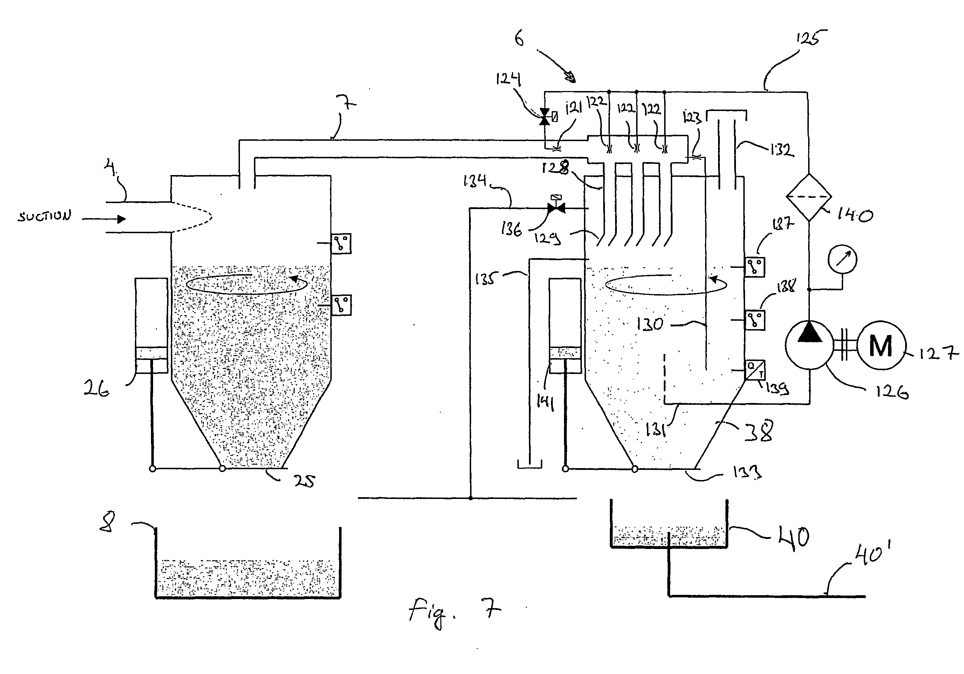

Figure 7 shows a further advantageous embodiment of an apparatus according to the invention, in which embodiment, compared to the embodiment of Figure 6, is added a spraying nozzle 123 for the second medium. In addition, the nozzle 121 arranged to the pipe 7 may be connected with a valve member 124 to start or stop operating, or the amount of sprayed liquid may be controlled with the valve member 124.

Most advantageously, the actuating-medium spray and thus the suction in the pipe 7 may be regulated when required, for example, by means of a pump by regulating the spray pressure. It is also possible to open or close one or more valve members 124 with which the number of spraying sprays is affected.

With the apparatus according to the invention, a significant improvement may be achieved to the underpressure produced by the apparatus. Typically, underpressure has been about 0.3 bar, and by utilising a device according to the invention, the underpressure of 0.8 bar has been achieved. One should notice that the stated value of underpressure is only one example, whereby the achieved values of underpressure may vary according to the system control range.

By utilising aqueous liquid as the actuating medium and by spraying liquid mist, an extremely efficient solution for an ejector device is achieved. Typically, the drop size (Dv 90) of liquid mist is below 200 micrometres. The actuating medium may be sprayed, if desired, with high pressure, advantageously 10-300 bar, and in some cases also lower pressures are possible. Compared to a pneumatic ejector, up to 50% saving in energy requirements is achieved. In addition, the lifetime of the system is considerably longer than the ones of vacuum pumps which have also been utilised for achieving underpressure.

It is obvious to those skilled in the art that the invention is not limited to the embodiments described above, but it may be varied within the scope of the enclosed claims. If required, the characteristic features possibly described in this specification along with other characteristic features may also be utilised separate from each other.

## Claims

1. A method for conveying material, advantageously food-industry bulk material, especially cutting offals or food waste, by means of a pressure difference in a conveying pipe (4), in which method the material is fed to a conveying pipe (4), and further in the conveying pipe to a separator device (5) in which the transferred material is separated from conveying air, in which method underpressure is achieved to the conveying pipe (4) with an ejector apparatus (6) the suction side of which is combined with the separator device (5), which ejector apparatus is operated with an actuating medium, **characterised in that** liquid mist, especially aqueous liquid mist is utilised as the actuating medium of the ejector apparatus (6).

2. A method according to claim 1, **characterised in that** sprayed liquid is collected at least partially and recirculated for spraying.

3. A method according to claim 1 or 2, **characterised in that** the medium is sprayed, if required, with several nozzles (121, 122, 123).

4. A method according any one of claims 1-3, **characterised in that** the medium is sprayed with at least one ejector nozzle (122) which is arranged to an ejector pipe (128) or to its vicinity, which ejector pipe is directed at a separator member (38) or extends inside the separator member (38).

5. A method according any one of claims 1-4, **characterised in that** to the ejector apparatus (6) is brought a second medium, especially a liquidous and/or gaseous medium.

6. A method according to any one of claims 1-5, **characterised in that** the second medium is brought to the ejector apparatus (6) along with the actuating medium.

7. A method according to any one of claims 1-6, **characterised in that** the second medium is brought regardless of the actuating medium.

8. A method according to any one of claims 1-7, **characterised in that** the proportion of the second medium and the actuating medium is regulated when required.

9. A method according to any one of claims 1-8, **characterised in that** the second medium is sprayed to the ejector device.

10. A method according to any one of claims 1-9, **characterised in that** the second medium is sprayed to the ejector device (6) before the mixing of the gases coming from the suction pipe (7) with the actuating medium of the ejector.

11. A method according to any one of claims 1-10, **characterised in that** the second medium is sprayed to the ejector device (6) during the mixing of the gases of the suction pipe (7) with the actuating medium or after it.

12. A method according to any one of claims 1-11, **characterised in that** at least a major part of the second medium is separated from the gas flow.

13. A method according to any one of claims 1-12, **characterised in that** odour and/or particle nuisances are eliminated and/or the suction effect of the ejector apparatus is intensified by bringing the second medium.

14. A method according to any one of claims 1-13, **characterised in that** as the second medium is utilised a liquidous medium, especially water.

15. An apparatus for conveying material, advantageously food-industry bulk material, especially cutting offals and food waste, by means of a pressure difference in a conveying pipe (4), which apparatus comprises a conveying pipe (4) for the material, a separator device (5), and a means for achieving underpressure to the conveying pipe (4) with an ejector apparatus (6) the suction side of which is connected to the separator device (5), which ejector apparatus is operated with an actuating medium, **characterised in that** the ejector apparatus (6) comprises at least one nozzle (121, 122) for spraying liquid mist which liquid mist is utilised as the actuating medium of the ejector and a means (125, 126, 127, 131) for feeding the liquid for the nozzle.

16. An apparatus according to claim 15, **characterised in that** the apparatus comprises a collecting means (38) for at least partial collecting of the sprayed medium and a means (131, 126, 125) for re-spraying the collected medium.

17. An apparatus according to claim 15 or 16, **characterised in that** at least one of the nozzles (121) is arranged to the suction pipe (7).

18. An apparatus according to any one of claims 15-17, **characterised in that** the apparatus comprises at least one ejector nozzle (122) which is arranged to an ejector pipe (128) or to its vicinity, which ejector pipe is directed at a separator member (38) or extends inside the separator member (38).

19. An apparatus according to any one of claims 15-18, **characterised in that** the apparatus comprises a means (123, 130) for feeding a second medium, advantageously a liquidous and/or gaseous medium, especially water, to the ejector apparatus (6).

20. An apparatus according to any one of claims 15-19, **characterised in that** the means for bringing the second medium comprises at least one nozzle (123).

21. An apparatus according to any one of claims 15-20, **characterised in that** the means for bringing the second medium comprises at least one nozzle (123) from at least one opening of which the second medium is sprayed to the ejector device (6) by means of the suction produced by the ejector.

22. An apparatus according to any one of claims 15-21, **characterised in that** the apparatus comprises a means (38) for separating liquidous and/or solid matter from the gas flow.

23. An apparatus according to any one of claims 15-22, **characterised in that** the apparatus comprises a means for achieving a rotating movement in the separator member (38).

## Patentansprüche

1. Verfahren zum Befördern von Material, vorteilhafterweise Massengut der Nahrungsmittelindustrie, insbesondere Schneidabfälle oder Nahrungsmittelabfälle, mittels einer Druckdifferenz in einem Förderrohr (4), wobei in dem Verfahren das Material zu einem Förderrohr (4) und ferner in dem Förderrohr zu einer Trennvorrichtung (5) zugeführt wird, in dem das übertragene Material von einer Förderluft getrennt wird, wobei in dem Verfahren an dem Förderrohr (4) ein Unterdruck mit einer Ejektorvorrichtung (6) erreicht wird, deren Saugseite mit der Trennvorrichtung (5) kombiniert ist, wobei die Ejektorvorrichtung mit einem Treibmedium betrieben wird, **dadurch gekennzeichnet, dass** als das Treibmedium der Ejektorvorrichtung (6) flüssiger Sprühnebel, insbesondere wässriger Flüssigkeitsnebel, verwendet wird.

2. Verfahren nach Anspruch 1, **dadurch gekennzeichnet, dass** Sprühflüssigkeit wenigstens teilweise aufgefangen und zum Versprühen wieder in Umlauf gebracht wird.

3. Verfahren nach Anspruch 1 oder 2, **dadurch gekennzeichnet, dass** das Medium bedarfsweise mittels mehrerer Düsen (121, 122, 123) versprüht wird.

4. Verfahren nach einem beliebigen der Ansprüche 1-3, **dadurch gekennzeichnet, dass** das Medium mit wenigstens einer Ejektordüse (122) versprüht wird, die an einem Ejektorrohr (128) oder in seiner Nähe angeordnet ist, wobei das Ejektorrohr auf ein Trennelement (38) gerichtet ist oder sich innerhalb des Trennelementes (38) erstreckt.

5. Verfahren nach einem beliebigen der Ansprüche 1-4, **dadurch gekennzeichnet, dass** der Ejektorvorrichtung (6) ein zweites Medium, insbesondere ein flüssiges und/oder gasförmiges Medium, zugeführt wird.

6. Verfahren nach einem beliebigen der Ansprüche 1-5, **dadurch gekennzeichnet, dass** das zweite Medium der Ejektorvorrichtung (6) gemeinsam mit dem Treibmedium zugeführt wird.

7. Verfahren nach einem beliebigen der Ansprüche 1-6, **dadurch gekennzeichnet, dass** das zweite Medium ungeachtet des Treibmediums zugeführt wird.

8. Verfahren nach einem beliebigen der Ansprüche 1-7, **dadurch gekennzeichnet, dass** das Verhältnis zwischen dem zweiten Medium und dem Treibmedium bedarfsweise geregelt wird.

9. Verfahren nach einem beliebigen der Ansprüche 1-8, **dadurch gekennzeichnet, dass** das zweite Medium zu der Ejektorvorrichtung gesprüht wird.

10. Verfahren nach einem beliebigen der Ansprüche 1-9, **dadurch gekennzeichnet, dass** das zweite Medium in die Ejektorvorrichtung (6) gesprüht wird, bevor sich die von dem Saugrohr (7) ankommenden Gase mit dem Treibmedium des Ejektors vermischen.

11. Verfahren nach einem beliebigen der Ansprüche 1-10, **dadurch gekennzeichnet, dass** das zweite Medium während der Vermischung der Gase des Saugrohrs (7) mit dem Treibmedium oder danach in die Ejektorvorrichtung (6) gesprüht wird.

12. Verfahren nach einem beliebigen der Ansprüche 1-11, **dadurch gekennzeichnet, dass** wenigstens ein Großteil des zweiten Mediums von dem Gasstrom abgetrennt wird.

13. Verfahren nach einem beliebigen der Ansprüche 1-12, **dadurch gekennzeichnet, dass** durch Einbringen des zweiten Mediums Geruchs- und/oder Teilchenbelästigungen beseitigt werden und/oder der Saugeffekt der Ejektorvorrichtung intensiviert wird.

14. Verfahren nach einem beliebigen der Ansprüche 1-13, **dadurch gekennzeichnet, dass** als zweites Medium ein flüssiges Medium, insbesondere Wasser, verwendet wird.

15. Vorrichtung zur Beförderung von Material, vorteilhafterweise Massengut der Nahrungsmittelindustrie, insbesondere Schneidabfälle und Nahrungsmittelabfall, mittels einer Druckdifferenz in einem Förderrohr (4), wobei die Vorrichtung ein Förderrohr (4) für das Material, eine Trennvorrichtung (5) und eine Einrichtung zur Erzielung eines Unterdrucks an dem Förderrohr (4) mit einer Ejektorvorrichtung (6) aufweist, deren Saugseite mit der Trennvorrichtung (5) verbunden ist, wobei die Ejektorvorrichtung mit einem Treibmittel betrieben wird, **dadurch gekennzeichnet, dass** die Ejektorvorrichtung (6) wenigstens eine Düse (121, 122) zum Versprühen eines Flüssigkeitsnebels, wobei der Flüssigkeitsnebel als das Treibmittel des Ejektors verwendet wird, und eine Einrichtung (125, 126, 127, 131) zur Zuführung der Flüssigkeit für die Düse aufweist.

16. Vorrichtung nach Anspruch 15, **dadurch gekennzeichnet, dass** die Vorrichtung eine Auffangeinrichtung (38) zum wenigstens teilweisen Auffangen des versprühten Mediums und eine Einrichtung (131, 126, 125) zum Wiederversprühen des aufgefangenen Mediums aufweist.

17. Vorrichtung nach Anspruch 15 oder 16, **dadurch gekennzeichnet, dass** wenigstens eine der Düsen (121) an dem Saugrohr (7) angeordnet ist.

18. Vorrichtung nach einem beliebigen der Ansprüche 15-17, **dadurch gekennzeichnet, dass** die Vorrichtung wenigstens eine Ejektordüse (122) aufweist, die an einem Ejektorrohr (128) oder in seiner Nähe angeordnet ist, wobei das Ejektorrohr auf ein Trennelement (38) gerichtet ist oder sich innerhalb des Trennelementes (38) erstreckt.

19. Vorrichtung nach einem beliebigen der Ansprüche 15-18, **dadurch gekennzeichnet, dass** die Vorrichtung eine Einrichtung (123, 130) zur Zuführung eines zweiten Mediums, vorteilhafterweise eines flüssigen und/oder gasförmigen Mediums, insbesondere Wasser, zu der Ejektorvorrichtung (6) aufweist.

20. Vorrichtung nach einem beliebigen der Ansprüche 15-19, **dadurch gekennzeichnet, dass** die Einrichtung zur Zuführung des zweiten Mediums wenigstens eine Düse (123) aufweist.

21. Vorrichtung nach einem beliebigen der Ansprüche 15-20, **dadurch gekennzeichnet, dass** die Einrichtung zur Zuführung des zweiten Mediums wenigstens eine Düse (123) aufweist, von deren wenigstens einer Öffnung aus das zweite Medium zu der Ejektorvorrichtung (6) mittels der durch den Ejektor erzeugten Saugwirkung versprüht wird.

22. Vorrichtung nach einem beliebigen der Ansprüche 15-21, **dadurch gekennzeichnet, dass** die Vorrichtung eine Einrichtung (38) zum Abtrennen eines flüssigen und/oder festen Stoffes von dem Gasstrom aufweist.

23. Vorrichtung nach einem beliebigen der Ansprüche 15-22, **dadurch gekennzeichnet, dass** die Vorrichtung eine Einrichtung zum Erzielen einer Drehbewegung in dem Trennelement (38) aufweist.

## Revendications

1. Procédé de convoiement de matériaux, avantageusement des matières alimentaires en vrac, spécialement des découpes d'abats ou des déchets alimentaires, au moyen d'une différence de pression dans une tuyau de convoyage (4), dans lequel procédé le matériau est alimenté vers un tuyau de convoyage (4), et en outre dans le tuyau de convoyage vers un dispositif séparateur (5) dans lequel le matériau transféré est séparé de l'air de convoyage, dans lequel procédé la dépression est obtenue dans le tuyau de convoyage (4) avec un dispositif éjecteur (6) dont le côté d'aspiration est combiné avec le dispositif séparateur (5), lequel dispositif éjecteur est actionné avec un médium d'actionnement, **caractérisé en ce qu'**un brouillard de liquide, spécialement un brouillard de liquide aqueux est utilisé comme le médium d'actionnement du dispositif éjecteur (6).

2. Procédé selon la revendication 1, **caractérisé en ce que** le liquide pulvérisé est collecté au moins en partie et remis en circulation pour la pulvérisation.

3. Procédé selon la revendication 1 ou 2, **caractérisé en ce que** le médium est pulvérisé, s'il le faut, avec plusieurs buses (121, 122, 123).

4. Procédé selon l'une quelconque des revendications 1-3, **caractérisé en ce que** le médium est pulvérisé avec au moins une buse d'éjection (122) qui est agencée sur un tuyau éjecteur (128) ou à son voisinage, lequel tuyau éjecteur est dirigé vers un élément séparateur (38) ou s'étend à l'intérieur de l'élément séparateur (38).

5. Procédé selon l'une quelconque des revendications 1-4, **caractérisé en ce qu'**au dispositif éjecteur (6) est amené un second médium, spécialement un médium liquide et/ou gazeux.

6. Procédé selon l'une quelconque des revendications 1-5, **caractérisé en ce que** le second médium est amené au dispositif éjecteur (6) conjointement avec le médium d'actionnement.

7. Procédé selon l'une quelconque des revendications 1-6, **caractérisé en ce que** le second médium est amené quel que soit le médium d'actionnement.

8. Procédé selon l'une quelconque des revendications 1-7, **caractérisé en ce que** la proportion du second médium et du médium d'actionnement est régulée quand il le faut.

9. Procédé selon l'une quelconque des revendications 1-8, **caractérisé en ce que** le second médium est pulvérisé vers le dispositif éjecteur.

10. Procédé selon l'une quelconque des revendications 1-9, **caractérisé en ce que** le second médium est pulvérisé vers le dispositif éjecteur (6) avant le mélange des gaz venant du tuyau d'aspiration (7) avec le médium d'actionnement de l'éjecteur.

11. Procédé selon l'une quelconque des revendications 1-10, **caractérisé en ce que** le second médium est pulvérisé vers le dispositif éjecteur (6) pendant le mélange des gaz venant du tuyau d'aspiration (7) avec le médium d'actionnement ou après lui.

12. Procédé selon l'une quelconque des revendications 1-11, **caractérisé en ce qu'**au moins une partie majeure du second médium est séparée de l'écoulement de gaz.

13. Procédé selon l'une quelconque des revendications 1-12, **caractérisé en ce que** les nuisances olfactives et/ou particulaires sont éliminées et/ou l'effet d'aspiration du dispositif éjecteur est intensifié en amenant le second médium.

14. Procédé selon l'une quelconque des revendications 1-13, **caractérisé en ce que** comme second médium est utilisé un médium liquide, spécialement de l'eau.

15. Dispositif de convoiement de matériaux, avantageusement des matières alimentaires en vrac, spécialement des découpes d'abats ou des déchets alimentaires, au moyen d'une différence de pression dans un tuyau de convoyage (4), lequel dispositif comprend un tuyau de convoyage (4) pour le matériau, un dispositif séparateur (5), et des moyens pour obtenir une dépression dans le tuyau de convoyage (4) avec un dispositif éjecteur (6) dont le côté d'aspiration est relié au dispositif séparateur (5), lequel dispositif éjecteur est actionné avec un médium d'actionnement, **caractérisé en ce que** le dispositif éjecteur (6) comprend au moins une buse (121, 122) pour pulvériser un brouillard de liquide lequel brouillard de liquide est utilisé comme le médium d'actionnement de l'éjecteur et des moyens (125, 126, 127, 131) pour alimenter le liquide pour la buse.

16. Dispositif selon la revendication 15, **caractérisé en ce que** le dispositif comprend des moyens de collecte (38) pour au moins une collecte partielle du médium pulvérisé et des moyens (131, 126, 125) pour repulvériser le médium collecté.

17. Dispositif selon la revendication 15 ou 16, **caractérisé en ce qu'**au moins l'une des buses (121) est agencée sur le tuyau d'aspiration (7).

18. Dispositif selon l'une quelconque des revendications 15-17, **caractérisé en ce que** le dispositif comprend au moins une buse d'éjection (122) qui est agencée sur un tuyau éjecteur (128) ou à son voisinage, lequel tuyau éjecteur est dirigé vers un élément séparateur (38) ou s'étend à l'intérieur de l'élément séparateur (38).

19. Dispositif selon l'une quelconque des revendications 15-18, **caractérisé en ce que** le dispositif comprend des moyens (123, 130) pour alimenter un second médium, avantageusement un médium liquide et/ou gazeux, spécialement de l'eau, vers le dispositif éjecteur (6).

20. Dispositif selon l'une quelconque des revendications 15-19, **caractérisé en ce que** les moyens pour amener le second médium comprennent au moins une buse (123).

21. Dispositif selon l'une quelconque des revendications 15-20, **caractérisé en ce que** les moyens pour amener le second médium comprennent au moins une buse (123) depuis au moins une ouverture de laquelle le second médium est pulvérisé vers le dispositif éjecteur (6) au moyen de l'aspiration produite par l'éjecteur.

22. Dispositif selon l'une quelconque des revendications 15-21, **caractérisé en ce que** le dispositif comprend des moyens (38) pour séparer des matières solides et/ou liquides de l'écoulement gazeux.

23. Dispositif selon l'une quelconque des revendications 15-22, **caractérisé en ce que** le dispositif comprend des moyens pour obtenir un mouvement de rotation dans l'élément séparateur (38).
